(19) Europäisches Patentamt
European Patent Office
Office européen des brevets

(11) EP 0 658 588 B1

(12) EUROPÄISCHE PATENTSCHRIFT

(45) Veröffentlichungstag und Bekanntmachung des Hinweises auf die Patenterteilung:
22.05.1996 Patentblatt 1996/21

(51) Int Cl.6: C08G 77/06

(21) Anmeldenummer: 94119829.3

(22) Anmeldetag: 15.12.1994

(54) **Verfahren zur Herstellung von Polydimethylsiloxanen**

Process for preparing polydimethylsiloxanes

Procédé de préparation de polydiméthylsiloxanes

(84) Benannte Vertragsstaaten:
DE ES FR GB

(30) Priorität: 16.12.1993 DE 4343033

(43) Veröffentlichungstag der Anmeldung:
21.06.1995 Patentblatt 1995/25

(73) Patentinhaber: Wacker-Chemie GmbH
D-81737 München (DE)

(72) Erfinder:
• Pachaly, Bernd, Dr.
D-84489 Burghausen (DE)
• Nagy, Gerhard
A-5282 Ranshofen (AT)
• Jacques, Wolfgang
D-84489 Burghausen (DE)
• Christa, Robert
D-84489 Burghausen (DE)

(56) Entgegenhaltungen:
EP-A- 0 515 082         FR-A- 2 348 939
FR-A- 2 518 099         GB-A- 2 104 906
GB-A- 2 112 407         US-A- 2 483 963
US-A- 5 169 970

## Beschreibung

Die Erfindung betrifft ein Verfahren zur Herstellung von Polydimethylsiloxanen aus Dimethyldichlorsilan mit einem Unterschuß an Wasser zur gleichzeitigen Gewinnung von gasförmigem Chlorwasserstoff.

Die Herstellung von Siliconölen oder Siliconkautschuk erfolgt durch Polymerisation cyclischer oder linearer Polydimethylsiloxan-Zwischenprodukte, die durch Hydrolyse und Polykondensation von Dimethyldichlorsilan erzeugt werden. Die technischen Hydrolyseverfahren erfolgen kontinuierlich, wie z. B. in H.K. Lichtenwalner und M.M. Sprung, Encyclopedia of Polymer Science, Vol. 12, Wiley & Sons, New York, 1970 beschrieben ist. Die grundlegende Reaktion verläuft nach der Gleichung

$$(m+n)(CH_3)_2SiCl_2+[2(m+n)+1]H_2O \rightarrow ((CH_3)_2SiO)_n+$$
$$HO((CH_3)_2SiO)_mH+ [2(m+n)]HCl,$$

wobei ein komplexes Gemisch cyclischer und linearer Siloxane gebildet wird. Als Quelle für das zur Hydrolyse benötigte Reaktionswasser dient Salzsäure. Der bei der Hydrolyse anfallende Chlorwasserstoff wird mit Methanol zu Chlormethan umgesetzt und bei der Synthese von Dimethyldichlorsilan nach dem Direktsyntheseverfahren wieder eingesetzt.

Die Hydrolyse von Dimethyldichlorsilan kann prinzipiell auf zwei Arten erfolgen, welche in W. Noll, Chemistry and Technology of Silicones, Academic Press, Orlando 1968, Kapitel 5.1.1 beschrieben sind. Verfahrensvariante A ist die Hydrolyse mit einem Überschuß an Wasser. Hier wird das Wasserangebot so geregelt, daß eine Salzsäure entsteht. Das Rohhydrolysat enthält in der Regel 20 - 50 % cyclische und 20 - 80 % lineare Polydimethylsiloxane mit OH-Endgruppen. Verfahrensvariante B ist die Hydrolyse mit einem Unterschuß Wasser. Hier erhält man ein Rohhydrolysat, in dem die linearen Siloxankomponenten Cl-endständig sind.

Die beiden Verfahrensvarianten A und B unterscheiden sich darin, wie der gasförmige Chlorwasserstoff gewonnen wird. In Variante A wird aceotrope Salzsäure (21 Gew.-%) im Kreis geführt, durch Hydrolyse des Dimethyldichlorsilans auf Sättigungskonzentration gebracht (37 Gew.-%) und Chlorwasserstoff durch Destillation gewonnen. Das Rohhydrolysat muß zur weiteren Verarbeitung von Anteilen verbliebener Salzsäure befreit werden. In Variante B fällt der Chlorwasserstoff direkt trocken und gasförmig an. Somit ist Variante B der Variante A überlegen, hat aber den Nachteil, daß ein Teil des Chlors über das Cl-endständige Rohhydrolysat verloren geht. Das Rohhydrolysat muß zur weiteren Verarbeitung neutralisiert werden, dabei fällt eine große Menge an Sauerwasser-Abfall, d. h. sehr verdünnter Salzsäure an, der verworfen werden muß. Dieser Verlust über den Sauerwasser-Abfall ist unvermeidlich, weil es nicht gelingt, eine Neutralwäsche des Cl-endständigen Rohhydrolysats mit der beschränkten Menge Wasser durchzuführen, die eine Rückführung der gesamten Wasch-Säure als Reaktionswasser in den Hydrolyseprozeß möglich macht. Der Grund dafür liegt darin, daß im Waschprozeß die Polykondensation der sich aus den Cl-endständigen linearen Siloxankomponenten bildenden OH-endständigen linearen Siloxankomponenten mit einer beschränkten Menge Wasser so rasch verläuft, daß das resultierende mittlere Molekulargewicht des neutralisierten Rohhydrolysats zu hoch für die weitere Verarbeitung ist, so z. B. eine Viskosität von 60 cst übersteigt. Die Polykondensation tritt beim Waschprozeß auf, wenn eine die Reaktion beschleunigende wäßrige Salzsäure im Kontakt mit der Siloxanphase resultiert.

Der Erfindung liegt die Aufgabe zugrunde, ein Verfahren zur Herstellung von niederviskosen Polydimethylsiloxanen aus Dimethyldichlorsilan bei gleichzeitiger Gewinnung von gasförmigem Chlorwasserstoff bereitzustellen, bei dem die Verluste an Chlorwasserstoff in Form von Sauerwasser-Abfall möglichst gering sind.

Die Erfindung betrifft ein Verfahren zur Herstellung von Polydimethylsiloxanen, bei dem

in einem ersten Schritt Dimethyldichlorsilan mit in Salzsäure vorhandenem Wasser zu einem Rohhydrolysat, bestehend aus cyclischen und linearen, Chlor enthaltenden Polydimethylsiloxanen und gasförmigem Chlorwasserstoff umgesetzt wird und in einem zweiten Schritt das Rohhydrolysat zur Reduzierung des Chlorgehalts mit Wasserdampf unter Bildung von Salzsäure behandelt wird, wobei im zweiten Schritt gebildete Salzsäure im ersten Schritt eingesetzt wird.

Das erfindungsgemäße Verfahren ist so steuerbar, daß geringere Mengen oder kein Chlorwasserstoff über das Abwasser verloren gehen.

Das im ersten Schritt gebildete Rohhydrolysat besteht aus cyclischen, Cl-endständigen und gegebenenfalls OH-endständigen Polydimethylsiloxanen, wobei vorzugsweise höchstens 10 Gew.-%, insbesondere höchstens 1 Gew.-%, der linearen Polydimethylsiloxanendgruppen OH-Gruppen sind.

Der Druck im ersten Schritt kann so gewählt werden, daß eine mechanische Verdichtung des anfallenden Chlorwasserstoffgases nicht notwendig ist, um direkt in anderen Verfahren eingesetzt zu werden. Der Druck beträgt vorzugsweise 0,15 bis 0,5 MPa, insbesondere 0,25 bis 0,35 MPa. Die übliche mechanische Verdichtung von Chlorwasserstoff ist sehr aufwendig, da die Entfernung von Verunreinigungen, insbesondere von Wasser zum Schutz der Kompressoren vor Korrosion erforderlich ist. Beispielsweise kann der sich unter Druck befindliche Chlorwasserstoff mit Methanol zur Herstellung von Chlormethan eingesetzt werden, welches wiederum bei der Methylchlorsilansynthese verwendet wird. So kann der überwiegende Teil des Chlors im Kreis geführt werden, ohne an die Umwelt abgegeben zu werden.

Im zweiten Schritt wird der Chlorgehalt der Polydimethylsiloxane extrahiert. Die Viskosität der Polydimethylsiloxane im Rohhydrolysat wird durch den Einsatz der gleichen Menge Wasser in Form von Wasserdampf kaum erhöht, im Gegensatz zum bekannten Einsatz von Wasser in flüssiger Form. Dadurch wird für die Herstellung von niederviskosen Polydimethylsiloxanen weniger Wasser im zweiten Schritt benötigt. Es kann deshalb eine konzentrierte Salzsäure hergestellt werden, von der eine große Menge, vorzugsweise mindestens 50, insbesondere mindestens 90 % im ersten Schritt wieder eingesetzt werden kann, dabei vollständig zu gasförmigem Chlorwasserstoff und zu Rohhydrolysat umgesetzt und dadurch verbraucht wird.

Die konzentrierte Salzsäure kann auch für andere Zwecke eingesetzt werden.

In einer besonders bevorzugten Ausführungsform wird im zweiten Schritt höchstens so viel Wasser eingesetzt, daß das Wasser der entstehenden Salzsäure im ersten Schritt vollständig umgesetzt wird.

Der zweite Schritt des erfindungsgemäßen Verfahrens wird vorzugsweise bei einer Temperatur von 110 bis 160°C durchgeführt.

Die Behandlung des Rohhydrolysats im zweiten Schritt kann durch Einleiten des Wasserdampfes im Gleichstrom oder Gegenstrom erfolgen. Die Behandlung erfolgt vorzugsweise in einer Kolonne, beispielsweise in einer Füllkörper- oder Strippkolonne. Zur Herstellung von Polydimethylsiloxanen mit einem besonders geringen Chlorgehalt kann die Behandlung mit Wasserdampf auch in zwei oder mehr Stufen erfolgen. Beispielsweise kann in der zweiten Stufe, in der nur noch geringe Chlorwasserstoffmengen anfallen, ein Teil des Dampfes eingespeist werden und der andere Teil in der ersten Stufe eingespeist werden. Das in der zweiten Stufe anfallende Sauerwasser kann, falls die in der ersten Stufe anfallende Salzsäure nicht ausreicht, im ersten Schritt des erfindungsgemäßen Verfahrens gegebenenfalls teilweise wieder eingesetzt werden. In einer anderen Ausführungsform wird die gesamte Dampfmenge in die zweite Stufe eingespeist, wobei ein Teil des in der zweiten Stufe anfallenden chlorwasserstoffhaltigen Dampfes in die erste Stufe eingespeist wird. Dabei kann der in der zweiten Stufe anfallende chlorwasserstoffhaltige Dampf zusammen mit der in der ersten Stufe anfallenden Salzsäure im ersten Schritt des erfindungsgemäßen Verfahrens gegebenenfalls teilweise wieder eingesetzt werden.

Zur Herstellung von Polydimethylsiloxanen mit einem besonders geringen Chlorgehalt kann nach dem zweiten Schritt, insbesondere wenn dieser einstufig durchgeführt wird, eine Nachbehandlung auch durch eine Base, wie Natronlauge, wässriges Natriumcarbonat oder Ammoniak erfolgen.

Das erfindungsgemäße Verfahren kann absatzweise, halbkontinuierlich oder vollkontinuierlich durchgeführt werden, wobei bevorzugt die vollkontinuierliche Fahrweise beider Schritte, beispielsweise in einem Loop-Reaktor, insbesondere in einem Anlagenverbund zum Einsatz kommt.

In einer Ausführungsform werden die Polydimethylsiloxane gemeinsam behandelt und erst nach der Extraktion des Chlorgehalts im zweiten Schritt in leichtflüchtige und schwerflüchtige Polydimethylsiloxane aufgetrennt.

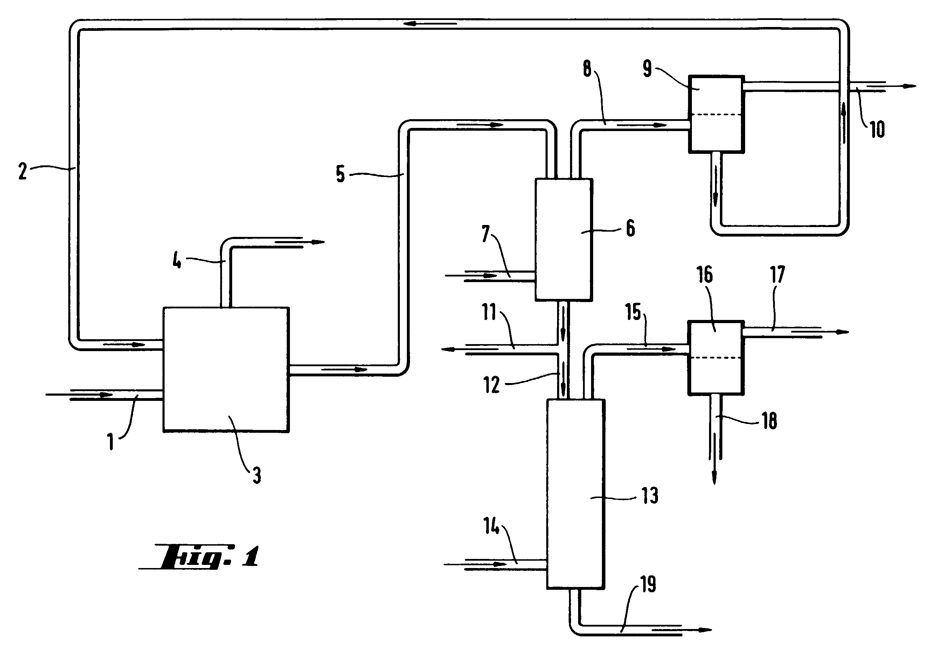

In einer anderen Ausführungsform werden die leichtflüchtigen Polydimethylsiloxane nach dem ersten Schritt abgetrennt, beispielsweise vor dem zweiten Schritt und/oder nach den verschiedenen Stufen des zweiten Schritts und gegebenenfalls in den Reaktor des ersten Schritts des erfindungsgemäßen Verfahrens wieder eingeschleust. Diese Ausführungsform ist zur Herstellung von schwerflüchtigen Polydimethylsiloxanen bevorzugt, insbesondere die Abtrennung der leichtflüchtigen Polydimethylsiloxane nach den verschiedenen Stufen des zweiten Schritts und deren Rückführung in den Reaktor des ersten Schritts. Analog kann umgekehrt die Herstellung von nur leichtflüchtigen Polydimethylsiloxanen betrieben werden. Fig. 1 zeigt eine bevorzugte Ausführungsform des erfindungsgemäßen Verfahrens:

Über Leitung (1) wird Dimethyldichlorsilan und über Leitung (2) wird Salzsäure in den Loop-Reaktor (3) eingespeist. Dort wird gasförmiger Chlorwasserstoff, der über Leitung (4) abgeführt wird und das Rohhydrolysat hergestellt, welches über Leitung (5) am Kopf der Kolonne (6) zugegeben wird. In der Kolonne (6) wird das Rohhydrolysat im Gegenstrom mit Wasserdampf behandelt, welcher über Leitung (7) in die Kolonne (6) eingespeist wird. Kolonne (6) stellt die erste Stufe des zweiten Schritts des erfindungsgemäßen Verfahrens dar. Das am Kopf der Kolonne (6) austretende Gemisch dampfförmiger leichtflüchtiger Polydimethylsiloxane, Wasser und Chlorwasserstoff wird kondensiert und über Leitung (8) in einen Abscheider (9) eingespeist. Dort werden die leichtflüchtigen Polydimethylsiloxane und Salzsäure getrennt. Die leichtflüchtigen Polydimethylsiloxane werden über Leitung (10) abgeführt. Die Salzsäure wird über Leitung (2) in den Loop-Reaktor (3) eingespeist. Am Sumpf von Kolonne (6) werden die behandelten Polydimethylsiloxane über Leitung (11) abgelassen oder über Leitung (12) am Kopf der Kolonne (13) eingespeist. In der Kolonne (13) wird das Rohhydrolysat im Gegenstrom mit Wasserdampf behandelt, welcher über Leitung (14) eingespeist wird. Kolonne (13) stellt die zweite Stufe des zweiten Schritts des erfindungsgemäßen Verfahrens dar. Das am Kopf der Kolonne (13) austretende Gemisch dampfförmiger leichtflüchtiger Polydimethylsiloxane, Wasser und Chlorwasserstoff wird kondensiert und über Leitung (15) in einen Abscheider (16) eingespeist. Dort werden Polydimethylsiloxane und Sauerwasser getrennt. Die leichtflüchtigen Polydimethylsiloxane werden über Leitung (17) abgeführt. Das Sauerwasser wird über Leitung (18) abgelassen. Am Sumpf von Kolonne (13) werden die behandelten Polydimethylsiloxane über Leitung (19) abgelassen.

**Beispiele**

**Beispiel 1** (erster Schritt erfindungsgemäß)

In einer Hydrolyseanlage zur Hydrolyse von Dimethyldichlorsilan mit Wasserunterschuß wurde ein Rohhydrolysat erzeugt, das etwa 50 Gew.-% cyclische und 50 Gew.-% lineare, Cl-endständige Polydimethylsiloxane enthielt. Der Chlorgehalt der Polydimethylsiloxane lag bei 60g/kg Siloxan, die Viskosität betrug 5 mPa·s. Für die Herstellung von 3500 kg Rohhydrolysat wurden 860 kg einer ca. 25 Gew.-% igen Salzsäure als einzige Wasserquelle eingesetzt. Der anfallende Chlorwasserstoff wurde gasförmig mit einem Druck von etwa 0,3 MPa abgeführt.

**Beispiel 2** (zweiter Schritt nicht erfindungsgemäß; Rückgewinnung von HCl über Waschprozeß)

Von dem in Beispiel 1 hergestellten Rohhydrolysat wurden 3 500 kg/h mit 750 kg/h Wasser in einem Wasch-Loop-Reaktor bei 110 °C eingespeist. Das austretende Produktgemisch wurde in einem Schwerkraftabscheider in Siloxanphase und Wasserphase getrennt. Dabei fielen 3 390 kg/h Siloxan mit einem Cl-Gehalt von 2 g/kg Siloxan und einer Viskosität von 100 mPa·s an sowie 860 kg/h einer ca 25 %igen Salzsäure. Die Salzsäure wurde vollständig in Beispiel 1 wieder eingesetzt.

**Beispiel 3** (zweiter Schritt erfindungsgemäß; Rückgewinnung von HCl mittels Dampfextraktion)

In eine mit Füllkörpern beschickte Kolonne wurden 3 500 kg/h des in Beisiel 1 hergestellten Rohhydrolysats am Kopf aufgegeben und im Gegenstrom 750 kg/h Dampf bei 130 °C eingeleitet. Das am Kopf austretende Gemisch dampfförmiger Siloxan- Komponenten Wasser und Chlorwasserstoff wurde in einem Durchflußkühler kondensiert und in einem Schwerkraftabscheider in Siloxanphase und Wasserphase getrennt. Nach Vereinigung der kondensierten Siloxanphase vom Kopf der Kolonne mit dem aus dem Sumpf austretenden Siloxanstrom fielen 3 390 kg/h Siloxan mit einem Cl-Gehalt von 2 g/kg Siloxan und einer Viskosität von 30 mPa·s an sowie 860 kg/h einer 25 %-igen Salzsäure. Diese Salzsäure wurde in Beispiel 1 vollständig wieder eingesetzt.

**Beispiel 4** (zweiter Schritt erfindungsgemäß; Rückgewinnung von HCl mittels zweistufiger Dampfextration)

In eine zweistufige mit Füllkörpern beschickte Kolonne wurden 3 500 kg/h Rohhydrolysat gemäß Beispiel 1 am Kopf der ersten Stufe aufgegeben und im Gegenstrom 750 kg/h Dampf bei 130 °C am unteren Teil der ersten Stufe eingeleitet. Das am Kopf der ersten Stufe austretende Gemisch dampfförmiger Siloxankomponenten, Wasser und Chlorwasserstoff wurde kondensiert und in einem Schwerkraftabscheider in Siloxanphase und Waserphase getrennt. Am Sumpf der ersten Stufe fielen 2 860 kg/h Siloxan mit 2,4 g/kg Chlorgehalt an und dieses wurde auf die zweite Stufe der Kolonne aufgegeben. Am unteren Teil der zweiten Stufe wurden im Gegenstrom 1 500 kg/h Dampf bei 130 °C eingeleitet. Am Kopf der zweiten Stufe wurden flüchtige Siloxankomponenten, Wasser und Chlorwasserstoff abgezogen, kondensiert und in einem Schwerkraftabscheider in Siloxan- und Wasserphase getrennt. Dabei fielen ca. 1 500 kg Abwasser mit einem HCl-Gehalt von 3 - 4 g/kg an. Alle Siloxanströme wurden vereinigt, dabei wurden 3 390 kg/h Siloxan mit einem Chlorgehalt von kleiner 1 mg/kg erhalten.

**Patentansprüche**

1. Verfahren zur Herstellung von Polydimethylsiloxanen, bei dem

   in einem ersten Schritt Dimethyldichlorsilan mit in Salzsäure vorhandenem Wasser zu einem Rohhydrolysat, bestehend aus cyclischen und linearen, Chlor enthaltenden Polydimethylsiloxanen und gasförmigem Chlorwasserstoff umgesetzt wird und
   in einem zweiten Schritt das Rohhydrolysat zur Reduzierung des Chlorgehalts mit Wasserdampf unter Bildung von Salzsäure behandelt wird,
   wobei im zweiten Schritt gebildete Salzsäure im ersten Schritt eingesetzt wird.

2. Verfahren nach Anspruch 1, wobei der Druck des anfallenden Chlorwasserstoffgases 0,15 bis 0,5 MPa beträgt.

3. Verfahren nach Anspruch 1 oder 2, wobei im zweiten Schritt höchstens so viel Wasser eingesetzt wird, daß das Wasser der entstehenden Salzsäure im ersten Schritt vollständig umgesetzt wird.

4. Verfahren nach einem der Ansprüche 1 bis 3, wobei die Behandlung des Rohhydrolysats im zweiten Schritt mit Wasserdampf in einer Kolonne erfolgt.

5. Verfahren nach einem der Ansprüche 1 bis 4, wobei die Behandlung des Rohhydrolysats im zweiten Schritt mit Wasserdampf in mindestens zwei Stufen erfolgt.

6. Verfahren nach einem der Ansprüche 1 bis 5, wobei beide Schritte vollkontinuierlich durchgeführt werden.

## Claims

1. Process for preparing polydimethylsiloxanes which comprises

   in a first step, reacting dimethyldichlorosilane with water present in hydrochloric acid to give a crude hydrolysate comprising cyclic and linear, chlorine-containing polydimethylsiloxanes and gaseous hydrogen chloride and
   in a second step, treating the crude hydrolysate with steam to reduce the chlorine content and form hydrochloric acid,
   where the hydrochloric acid formed in the second step is used in the first step.

2. Process according to Claim 1, wherein the pressure of the hydrogen chloride gas obtained is from 0.15 to 0.5 MPa.

3. Process according to Claim 1 or 2, wherein the amount of water used in the second step is at most such that the water of the hydrochloric acid formed is completely reacted in the first step.

4. Process according to any one of Claims 1 to 3, wherein the treatment of the crude hydrolysate with steam in the second step is carried out in a column.

5. Process according to any one of Claims 1 to 4, wherein the treatment of the crude hydrolysate with steam in the second step is carried out in at least two stages.

6. Process according to any one of Claims 1 to 5, wherein both steps are carried out fully continuously.

## Revendications

1. Procédé de préparation de polydiméthylsiloxanes, lors duquel,

   dans une première étape, l'on fait réagir du diméthylchlorosilane avec l'eau présente dans de l'acide chlorhydrique pour former un hydrolysat brut, se composant de polydiméthylsiloxanes cycliques et linéaires, contenant du chlore et de chlorure d'hydrogène gazeux, et lors duquel,
   dans une deuxième étape, l'on traite l'hydrolysat brut en vue de la réduction de la teneur en chlore à l'aide de vapeur d'eau en formant de l'acide chlorhydrique,
   l'acide chlorhydrique formé dans la deuxième étape étant utilisé dans la première étape.

2. Procédé selon la revendication 1, caractérisé en ce que la pression du gaz de chlorure d'hydrogène qui se forme est de 0,15 à 0,5 MPa.

3. Procédé selon la revendication 1 ou 2, caractérisé en ce que la quantité d'eau utilisée dans la deuxième étape est au plus telle que l'eau de l'acide chlorhydrique formé réagit entièrement dans la première étape.

4. Procédé selon l'une quelconque des revendications 1 à 3, caractérisé en ce que le traitement de l'hydrolysat brut dans la deuxième étape se fait à l'aide de vapeur d'eau dans une colonne.

5. Procédé selon l'une quelconque des revendications 1 à 4, caractérisé en ce que le traitement de l'hydrolysat brut dans la deuxième étape se fait à l'aide de vapeur d'eau en au moins deux stades.

6. Procédé selon l'une quelconque des revendications 1 à 5, caractérisé en ce que les deux étapes sont effectuées de manière entièrement continue.

Fig. 1